# EUROPEAN PATENT SPECIFICATION

(11) **EP 1 410 627 B1**
(45) Date of publication and mention of the grant of the patent: **04.09.2013**
(21) Application number: 02764707.2
(22) Date of filing: 17.07.2002
(51) Int. Cl.: H04N 5/765

(54) **DIGITAL VIDEO DEVICE FOR INTEGRATION IN THE NETWORK AND METHOD**
DIGITALE VIDEOANLAGE ZUR INTEGRATION IN EINEM NETZWERK UND VERFAHREN
DISPOSITIF VIDEO NUMERIQUE A INTEGRER DANS UN RESEAU ET METHODE

(30) Priority: 25.07.2001 DE 10136176
(43) Date of publication of application: 21.04.2004
(73) Proprietor: Thomson Licensing, 92130 Issy-les-Moulineaux (FR)
(72) Inventor: WINTER, Marco, 30173 Hannover (DE)
(74) Representative: Thies, Stephan
(86) International application number: PCT/EP2002/007918
(87) International publication number: WO 2003/010960

(56) References cited:
- EP-A- 1 067 770
- EP-A1- 0 969 462
- EP-A2- 0 932 158
- EP-A2- 1 049 325

## Description

The present invention relates to a device and a method for the reproduction and/or recording of digital video signals in a device-specific data format based on a transport stream generated by a coder.

Such devices are known for example as digital video recorders, DVD players and/or recorders, hard disk video recorders and digital camcorders from consumer electronics. The term digital video devices is used hereinafter for these devices.

For the reproduction and/or recording of digital video signals on storage media, digital video devices generally use data formats based on an MPEG II transport stream, or the MPEG II transport stream directly. For recording on storage media, analogue video signals entering into the device must firstly be converted into the MPEG II transport stream and subsequently be converted, if appropriate, into digital video signals in a device-specific data format. Accordingly, for reproduction on analogue output devices, the digital video signals in the device-specific data format which are recorded on a storage medium must firstly be converted into the MPEG II transport stream and subsequently be converted into analogue video signals. If the video signals on the storage medium are already present as MPEG II transport stream, then the conversion is obviated. For recording and reproduction, digital video devices have an MPEG II coder and decoder for the conversion of analogue video signals into an MPEG II transport stream, and vice versa, and also, if appropriate, device-specific converters for conversion between MPEG II transport stream and device-specific data format. The MPEG II coder and decoder is one of the most cost-intensive electronic components of a digital video device.

For the transmission of digital data in networks, the DVB data format exists as an international standard. DVB stands for Digital Video Broadcasting. In addition to the transmission of digital video signals, the transmission of digital radio programmes and computer files and of other digital data is also possible by means of the DVB data format. DVB data signals are based on an MPEG II transport stream.

For example, EP 1 049 325 describes a multimedia card module having a DVB interface for connecting the module with a set-top box. The multimedia card module further comprises a CF- or an ATA-interface for connecting an external storage module. This storage module is used for storing a program stream derived from a transport stream received via the DVB interface.

EP 0 969 462 describes a DVD recorder, which has a digital input for receiving an MPEG-II-coded digital video signal from a satellite receiver for recording on a DVD. The DVD recorded further has a digital output for outputting an MPEG-II-coded digital video signal reproduced from a DVD, e.g. for recording this signal on a further DVD.

In the future, devices from the field of consumer electronics will be networked with one another and with PCs to a greater and greater extent. If analogue video signals are intended to be fed into such a network, this requires a special conversion device which converts the analogue video signals into digital video signals in a data format suitable for the network. This may be, for example, a plug-in card for a PC.

One example of a digital video device integrated in a network is given in EP 1 067 770, which describes a storage device that can be integrated in an IEE1394-based network. The storage device comprises a storage medium, e.g. a tape or a disc, for storing transport streams received from the network and for providing such transport streams to the network.

One object of the invention is to propose a digital video device which utilizes the existing coder in order to convert analogue video signals entering into the device into digital video signals in a data format which is used in a network, and to feed the digital video signals into such a network, so that a separate conversion device is not required.

This object is achieved by a device and a method as defined in the appended independent claims. Advantageous refinements are defined in the dependent claims.

More specifically, the object is achieved by virtue of the fact that a digital video device for the reproduction and/or recording of a digital video signal in a DVD data format based on a transport stream, which has a coder that converts an analogue video signal fed into the device into the transport stream, as well as a writing unit for recording the digital video signal in the DVD data format on a storage medium, has an additional converter, which converts the transport stream into a digital video signal in a DVB data format based on the same transport stream, and a digital output, via which the digital video signal in the DVB data format is output to a network. The use of an additional converter whilst at the same time utilizing the existing coder is a cost-effective solution for converting analogue video signals into digital video signals which can be fed into a network.

The digital video device advantageously has a second converter and a decoder, the second converter converting a digital video signal in the DVB data format, which is received from a network via a digital input, into the transport stream, and the decoder converting the transport stream into an analogue video signal, which is output via an analogue output of the device. This has the advantage that the digital video device can also convert digital video signals generated by other devices in the network into analogue video signals, which can be displayed on analogue display devices.

In a further advantageous embodiment, the digital video device has two further converters, the first converter converting the transport stream for recording into a digital video signal in the DVD data format and the second converter converting a digital video signal in the DVD data format for reproduction into the transport stream. It goes without saying that the converters can also be combined in a single module. In this way, it is possible to store digital video signals, which are received from a network, in the DVD data format on a storage medium and to condition digital video signals, which are reproduced in the DVD data format from a storage medium, for a network and to feed them into the latter.

A method according to the invention for converting an analogue video signal in a digital video device into a digital video signal in a DVB data format based on a transport stream, which simultaneously forms the basis for a DVD data format used for the reproduction and/or recording of a digital video signal with a writing unit of the digital video device, comprises the steps of:
- receiving the analogue video signal via an analogue input,
- converting the analogue video signal into the transport stream with a coder,
- converting the transport stream into the digital video signal in the DVB data format with a converter, and
- outputting the digital video signal in the DVB data format to a network via a digital output..

Advantageously, the method further has the steps of:
- receiving a digital video signal in the DVB data format from a network via a digital input,
- converting the digital video signal in the DVB data format into the transport stream with a converter,
- converting the transport stream into the analogue video signal with a decoder, and
- outputting the analogue video signal via an analogue output.

According to the invention, the digital video device and the method use an MPEG II transport stream as the transport stream. This is advantageous since MPEG II is an internationally agreed standard, which forms the basis for various device-specific data formats.

It goes without saying that combinations of advantageous features likewise lie within the scope of validity of the invention as defined in the claims.

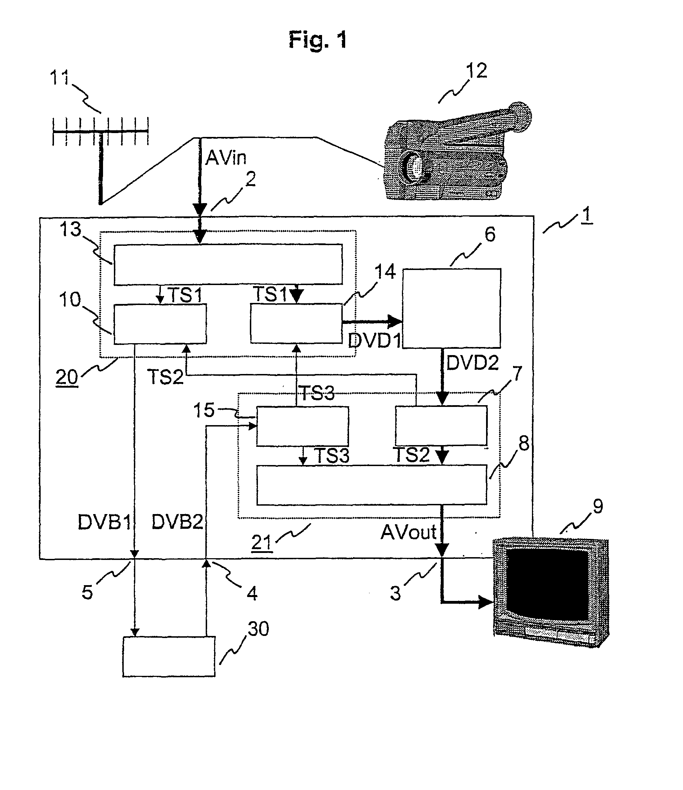

To provide a better understanding, the invention will be explained below using the advantageous exemplary embodiment shown in Figure 1, in which:
- Figure 1: shows a digital video device according to the invention using the example of a DVD recorder.

A digital video device (1) according to the invention is illustrated in Figure 1 using the example of a DVD recorder. In this case, the arrows depicted bold mark those steps of the processing of the video signals which are realized in a DVD recorder according to the prior art. Thin arrows mark those processing steps of the video signals which a DVD recorder according to the invention additionally has to carry out. Firstly, a description will be given of the steps of the processing of a video signal in a DVD recorder as are known from the prior art.

The DVD recorder (1) contains a signal processing unit (20), which converts an analogue video signal (AVin), which originates for example from a receiving antenna (11) or a camcorder (12) and is fed into the DVD recorder (1) via an analogue input (2), into a device-specific digital video signal (DVD1). The device-specific digital video signal (DVD1) is stored with the aid of a reading and writing unit (6) on a storage medium (not shown). The signal processing unit (20) has a coder (13), which converts the analogue video signal (AVin) into an MPEG II transport stream (TS1). A converter (14) converts the MPEG II transport stream (TS1) into the device-specific video signal (DVD1) suitable for recording.

The DVD recorder (1) has a further signal processing unit (21), which converts a device-specific digital video signal (DVD2), which is read from a storage medium (not shown) by the reading and writing unit (6), into an analogue video signal (AVout). The analogue video signal (AVout) is output via an analogue output (3) of the DVD recorder (1) and fed to an analogue video device or, as in the exemplary embodiment, displayed on an analogue display device (9), for example on a television. The signal processing unit (21) has a converter (7), which converts the device-specific digital video signal (DVD2) into an MPEG II transport stream (TS2). A decoder (8) converts the MPEG II transport stream (TS2) into the analogue video signal (AVout).

According to the invention, the signal processing unit (20) has an additional converter (10), which converts the MPEG II transport stream (TS1, TS2) output by the coder (13) or by the converter (7) into a video signal (DVB1) in the DVB data format. This video signal (DVB1) is output via a digital output (5) of the DVD recorder (1) and fed into a network (30). The DVD recorder (1) thus makes it possible to condition both analogue video signals (AVin) and digital video signals (DVD2), stored on storage media (not shown), for a network (30).

According to the invention, the signal processing unit (21) has an additional converter (15), which converts a digital video signal (DVB2) in the DVB data format, which is fed to the DVD recorder (1) from a network (30) via a digital input (4), into an MPEG II transport stream (TS3). This MPEG II transport stream (TS3) is converted into an analogue video signal (AVout) by the decoder (8) and output via the analogue output (3) to the analogue display device (9), or is converted into a digital video signal (DVD1) in the device-specific data format by the converter (14) and stored by means of the reading and writing unit (6) on a storage medium (not shown). The DVD recorder (1) thus makes it possible to display the digital video signals (DVB2), made available in a network (30), on an analogue display device (9) or to store them on a storage medium (not shown).

## Claims

1. A digital video device (1) for the reproduction and/or recording of a digital video signal (DVD1, DVD2) in a DVD data format based on a transport stream (TS1, TS2), the device (1) having a coder (13) which converts an analogue video signal (AVin), which enters into an analogue input (2) of the device (1), into the transport stream (TS1), and a writing unit (6) for recording the digital video signal (DVD1, DVD2) in the DVD data format on a storage medium, **characterized in that** it has a converter (10), which converts the transport stream (TS1) into a digital video signal (DVB1) in a DVB data format based on the same transport stream (TS1), and a digital output (5), via which the digital video signal (DVB1) in the DVB data format is output to a network.

2. The digital video device according to Claim 1, **characterized in that** it has a further converter (15) and a decoder (8), the further converter (15) converting a digital video signal (DVB2) in the DVB data format, which signal is received from a network via a digital input (4) of the device (1), into the transport stream (TS3) and the decoder (8) converting the transport stream (TS3) into an analogue video signal (AVout), which is output via an analogue output (3) of the device (1).

3. The digital video device according to Claim 1 or 2, **characterized in that** it has further converters (7, 14), which convert the digital video signal (DVD1, DVD2) in the DVD data format for reproduction into the transport stream (TS2) or convert the transport stream (TS1, TS3) for recording into the digital video signal (DVD1) in the DVD data format.

4. The digital video device according to one of Claims 1 to 3, **characterized in that** the transport stream (TS1, TS2, TS3) is an MPEG II transport stream.

5. A method for converting an analogue video signal (AVin) in a digital video device (1) into a digital video signal (DVB1) in a DVB data format based on a transport stream (TS1, TS2), which simultaneously forms the basis for a DVD data format used for the reproduction and/or recording of a digital video signal (DVD1, DVD2) with a writing unit (6) of the digital video device (1), the method having the steps of:
- receiving the analogue video signal (AVin) via an analogue input (2),
- converting the analogue video signal (AVin) into the transport stream (TS1, TS2) with a coder (13),
- converting the transport stream (TS1) into the digital video signal (DVB1) in the DVB data format with a converter (10), and
- outputting the digital video signal (DVB1) in the DVB data format to a network via a digital output (5).

6. The method according to claim 5, further having the steps of:
- receiving a digital video signal (DVB2) in the DVB data format from a network via a digital input (4),
- converting the digital video signal (DVB2) in the DVB data format into the transport stream (TS3) with a converter (15),
- converting the transport stream (TS3) into the analogue video signal (AVout) with a decoder (8), and
- outputting the analogue video signal (AVout) via an analogue output (3).

7. The method according to Claim 5 or 6, **characterized in that** the transport stream (TS1, TS2, TS3) is an MPEG II transport stream.

## Patentansprüche

1. Ein digitales Videogerät (1) zur Wiedergabe und/oder Aufzeichnung eines digitalen Videosignals (DVD1 , DVD2) in einem DVD-Datenformat, das auf einem Transportstrom (TS1 , TS2) basiert, wobei das Gerät (1) einen Kodierer (13) aufweist, der ein analoges Videosignal (AVin), das in einen analogen Eingang (2) des Gerätes (1) eingeht, in den Transportstrom (TS1) umwandelt, und eine Schreibeinheit (6) zum Aufzeichnen des digitalen Videosignals (DVD1 , DVD2) im DVD-Datenformat auf einem Speichermedium, **dadurch gekennzeichnet, dass** es einen Konvertierer (10) aufweist, der den Transportstrom (TS1) in ein digitales Videosignal (DVB1) in einem DVB-Datenformat konvertiert, das auf dem selben Transportstrom (TS1) basiert, und einen digitalen Ausgang (5), über den das digitale Videosignal (DVB1) im DVB-Datenformat an ein Netzwerk ausgegeben wird.

2. Das digitale Videogerät (1) gemäß Anspruch 1, **dadurch gekennzeichnet, dass** es einen weiteren Konvertierer (15) und einen Dekodierer (8) aufweist, wobei der weitere Konvertierer (15) ein digitales Videosignal (DVB2) im DVB-Datenformat, welches über einen digitalen Eingang (4) des Gerätes (1) aus einem Netzwerk empfangen wird, in den Transportstrom (TS3) konvertiert und der Dekodierer (8) den Transportstrom (TS3) in ein analoges Videosignal (AVout) umwandelt, das über einen analogen Ausgang (3) des Gerätes (1) ausgegeben wird.

3. Das digitale Videogerät (1) gemäß Anspruch 1 oder 2, **dadurch gekennzeichnet, dass** es weitere Konvertierer (7,14) aufweist, die das digitale Videosignal (DVD1 , DVD2) im DVD-Datenformat für die Wiedergabe in den Transportstrom (TS2) konvertieren bzw. den Transportstrom (TS1 , TS3) für die Aufzeichnung in das digitale Videosignal (DVD1) im DVD-Datenformat konvertieren.

4. Das digitale Videogerät (1) gemäß einem der Ansprüche 1 bis 3, **dadurch gekennzeichnet, dass** der Transportstrom (TS1 , TS2 , TS3) ein MPEG II-Transportstrom ist.

5. Ein Verfahren zur Umwandlung eines analogen Videosignals (AVin) in einem digitalen Videogerät (1) in ein digitales Videosignal (DVB1) in einem DVB-Datenformat, das auf einem Transportstrom (TS1 , TS2) beruht, der gleichzeitig die Grundlage für ein DVD-Datenformat bildet, welches für die Wiedergabe und/oder Aufzeichnung eines digitalen Videosignals (DVD1 , DVD2) mit einer Schreibeinheit (6) des digitalen Videogeräts (1) verwendet wird, wobei das Verfahren die Schritte aufweist:
- Empfangen des analogen Videosignals (AVin) über einen analogen Eingang (2),
- Umwandlung des analogen Videosignals (AVin) in den Transportstrom (TS1 , TS2) mit einem Kodierer (13),
- Konvertierung des Transportstroms (TS1) in das digitale Videosignal (DVB1) im DVB-Datenformat mit einem Konvertierer (10), und
- Ausgeben des digitalen Videosignals (DVB1) im DVB-Datenformat an ein Netzwerk über einen digitalen Ausgang (5).

6. Das Verfahren gemäß Anspruch 5, wobei das Verfahren zusätzlich die Schritte aufweist:
- Empfangen eines digitalen Videosignals (DVB2) im DVB-Datenformat aus einem Netzwerk über einen digitalen Eingang (4),
- Konvertierung des digitalen Videosignals (DVB2) im DVB-Datenformat in den Transportstrom (TS3) mit einem Konvertierer (15),
- Umwandlung des Transportstroms (TS3) in das analoge Videosignal (AVout) mit einem Dekodierer (8), und
- Ausgeben des analogen Videosignals (AVout) über einen analogen Ausgang (3).

7. Das Verfahren gemäß Anspruch 5 oder 6, **dadurch gekennzeichnet, dass** der Transportstrom (TS1 , TS2 , TS3) ein MPEG II-Transportstrom ist.

## Revendications

1. Un dispositif vidéo numérique (1) pour la reproduction et/ou l'enregistrement d'un signal vidéo numérique (DVD1, DVD2) au format de données DVD sur la base d'un flux de transport (TS1, TS2), le dispositif (1) ayant un codeur (13) qui convertit un signal vidéo analogique (AVin), qui entre dans une entrée analogique (2) du dispositif (1), en flux de transport (TS1), et une unité d'écriture (6) pour enregistrer le signal vidéo numérique (DVD1, DVD2) au format de données DVD sur un support de stockage, **caractérisé en ce qu'**il comporte un convertisseur (10), qui convertit le flux de transport (TS1) en un signal vidéo numérique (DVB1) au format de données DVB sur la base du même flux de transport (TS1) et une sortie numérique (5), via laquelle le signal vidéo numérique (DVB1) au format de données DVB est émis sur un réseau.

2. Le dispositif vidéo numérique selon la revendication 1, **caractérisé en ce qu'**il comporte un autre convertisseur (15) et un décodeur (8), l'autre convertisseur (15) convertissant un signal vidéo numérique (DVB2) au format de données DVB, lequel signal est reçu d'un réseau via une entrée numérique (4) du dispositif (1), en flux de transport (TS3) et le décodeur (8) convertissant le flux de transport (TS3) en un signal vidéo analogique (AVout), qui est émis via une sortie analogique (3) du dispositif (1).

3. Le dispositif vidéo numérique selon la revendication 1 ou 2, **caractérisé en ce qu'**il comporte d'autres convertisseurs (7, 14), qui convertissent le signal vidéo numérique (DVD1, DVD2) au format de données DVD pour la reproduction en flux de transport (TS2) ou qui convertissent le flux de transport (TS1, TS3) pour l'enregistrement en signal vidéo numérique (DVD1) au format de données DVD.

4. Le dispositif vidéo numérique selon l'une des revendications 1 à 3, **caractérisé en ce que** le flux de transport (TS1, TS2, TS3) est un flux de transport MPEG II.

5. Un procédé pour convertir un signal vidéo analogique (AVin) dans un dispositif vidéo numérique (1) en un signal vidéo numérique (DVB1) à un format de données DVB sur la base d'un flux de transport (TS1, TS2), qui forme simultanément la base pour un format de données DVD utilisé pour la reproduction et/ou l'enregistrement d'un signal vidéo numérique (DVD1, DVD2) avec une unité d'écriture (6) du dispositif vidéo numérique (1), le procédé comportant les étapes consistant à :
- recevoir le signal vidéo analogique (AVin) via une entrée analogique (2),
- convertir le signal vidéo analogique (AVin) en flux de transport (TS1, TS2) avec un codeur (13),
- convertir le flux de transport (TS1) en signal vidéo numérique (DVB1) au format de données DVB avec un convertisseur (10), et
- émettre le signal vidéo numérique (DVB1) au format de données DVB vers un réseau par l'intermédiaire d'une sortie numérique (5).

6. Le procédé selon la revendication 5, comprenant en outre les étapes consistant à :
- recevoir un signal vidéo numérique (DVB2) au format de données DVB à partir d'un réseau par l'intermédiaire d'une entrée numérique (4).
- convertir un signal vidéo numérique (DVB2) au format de données DVB en flux de transport (TS3) avec un convertisseur (15).
- convertir le flux de transport (TS3) en signal vidéo analogique (AVout) avec un décodeur (8), et
- émettre le signal vidéo analogique (AVout) par l'intermédiaire d'une sortie analogique (3).

7. Le procédé selon la revendication 5 ou 6, **caractérisé en ce que** le flux de transport (TS1, TS2, TS3) est un flux de transport MPEG II.
